Europäisches Patentamt

European Patent Office

Office européen des brevets

(19)

(11) Numéro de publication: **0 349 400**

**A1**

(12) # DEMANDE DE BREVET EUROPEEN

(21) Numéro de dépôt: 89401797.9

(22) Date de dépôt: 26.06.89

(51) Int. Cl.⁵: **C 09 J 161/20**
C 08 L 97/02, B 27 N 3/06,
B 27 N 1/02
//(C09J161/20,129:04)

(30) Priorité: 28.06.88 FR 8808791

(43) Date de publication de la demande:
03.01.90 Bulletin 90/01

(84) Etats contractants désignés:
AT BE CH DE ES FR GB GR IT LI NL SE

(71) Demandeur: **R.O.L. ROUGIER OCEAN LANDEX**
**339 Avenue de la Rochelle**
**F-79000 Niort (FR)**

(72) Inventeur: **Camoisson, Eugène**
**10 Rue Breuillac Laydet Saint Liguaire**
**F-79000 Niort (FR)**

**Rouger, Serge**
**Chiron Lacombe**
**F-79000 Sciecq (FR)**

**Coue, Jean-Claude**
**37 Rue de la Marne**
**F-79000 Niort (FR)**

(74) Mandataire: **Muller, René**
**SAINT-GOBAIN RECHERCHE 39, quai Lucien Lefranc-BP 135**
**F-93303 Aubervilliers Cédex (FR)**

(54) **Procédé pour la fabrication industrielle de contreplaqués ou autres matériaux à base de lignocellulose à l'aide de résines aminoplastes.**

(57) L'invention concerne un procédé pour la fabrication de produits à base de bois, à faible tendance à l'émanation de formaldéhyde, notamment des panneaux contreplaqués. Le procédé utilise un liant réactif au formaldéhyde permettant de réaliser un mélange collant à base de résine aminoplaste présentant simultanément un bas taux de formol libre et une bonne aptitude au collage temporaire, appelé aussi prépressage à froid, ce liant associant une résine aminoplaste dont le rapport molaire formaldéhyde/composé amino est compris entre 1/1 et 1,6/1 à un alcool polyvinylique qui a la caractéristique de réagir en présence d'un donneur d'acide avec le formaldéhyde libre en créant un acétal sous forme de gel poisseux.

EP 0 349 400 A1

Description

## PROCEDE POUR LA FABRICATION INDUSTRIELLE DE CONTREPLAQUES OU AUTRES MATERIAUX A BASE DE LIGNOCELLULOSE A L'AIDE DE RESINES AMINOPLASTES.

La présente invention concerne la fabrication de panneaux à base de bois à faible tendance à l'émanation de formaldéhyde tels des contreplaqués ou autres matériaux à base de lignocellulose.

Dans l'état actuel de la technique, les composés à base de bois destinés à un usage intérieur sont le plus souvent fabriqués par un collage à l'aide de liant à base de résines aminoplastes, soit à froid dans quelques cas, soit le plus souvent à chaud. Ces résines aminoplastes, principalement urée-formaldéhyde, sont en effet appréciées en raison de leur prix relativement faible en regard de leurs caractéristiques élevées de collage et de leur couleur claire. Elles présentent aussi l'avantage d'offrir, au sein de mélanges collants correctement formulés, une bonne aptitude au "prépressage".

L'aptitude au "prépressage" à froid, qui est en fait une aptitude au collage temporaire, est très importante dans le processus de fabrication industrielle des composés à base de bois, finalement fabriqués par pressage à chaud. Après que la matière bois, qu'elle soit sous forme de particules pour le panneau aggloméré, de fibres pour le panneau appelé MDF (pour "Médium Density Fiberboard") ou plus particulièrement de placages pour le contreplaqué, ait reçu son encollage, elle est conformée en fonction de sa nature. Après conformation, en gâteau pour les particules ou les fibres, en empilage à fil croisé pour les placages, la matière bois ainsi encollée présente un volume important, en raison de la hauteur de conformation, et cette conformation présente une fragilité au transport.

Dans l'industrie des panneaux de particules ou de fibres, selon le type de chaîne de fabrication et le procédé de chargement de la presse, on peut être amené à réaliser un prépressage à froid (ou a température faible) dans une presse ou dans une calandreuse. Le but est à la fois de diminuer l'épaisseur du gâteau pour la rendre compatible avec l'ouverture disponible entre les plateaux de presse et de donner une cohésion suffisante à ce gâteau pour éviter son effondrement lors du transport depuis le point de conformation jusque dans la presse chaude.

Dans l'industrie des panneaux de contreplaqués, ce prépressage est rendu nécessaire par la tendance des placages encollés à gondoler et, par conséquence, à gêner sinon empêcher l'entrée de l'empilage dans la presse, ou à se replier ou se casser au moment de cette entrée.

Il est donc important de pouvoir disposer d'un liant d'encollage qui possède une capacité de faire adhérer provisoirement entre elles les parties lignocellulosiques constitutives, durant le temps de transport et de stockage intermédiaires situé entre la conformation après encollage et la fermeture de la presse chaude ; cette adhésion provisoire devant être acquise après un simple pressage à froid ou à température modérée, appelé prépressage.

Pour la facilité de compréhension, c'est dans le contexte de la fabrication du contreplaqué avec une résine urée-formaldéhyde qu'est placé ce qui suit. Mais l'invention reste valable pour les autres matériaux dérivés du bois.

Si les résines urée-formaldéhyde présentent dans les conditions habituelles une bonne aptitude au prépressage, il y a deux cas où cette aptitude devient insuffisante :

D'une part, avec certaines essences de bois, comme par exemple le peuplier, il est pratiquement impossible d'obtenir, même en faisant varier les taux et nature des charges ajoutées dans le mélange collant, un collage temporaire satisfaisant. On connait le cas de certains fabricants qui, dans ces conditions, se résignent à poser des agrafes pour solidariser les placages entre eux.

D'autre part, avec la nécessité actuelle de fabriquer des matériaux possédant une quantité de formaldéhyde libre la plus faible possible, le problème se trouve aggravé.

Les résines urée-formaldéhyde sont produites par une réaction de condensation en milieu acide entre une molécule d'urée "U" composé amino et un excès de formaldéhyde "F". La réaction type pour un rapport molaire F/U = 2/1 est :

$$H_2N-CO-NH_2 + 2HCHO \longrightarrow H_2O + HOCH_2-NH-CO-N=CH_2$$

Celles couramment utilisées pour l'industrie des contreplaqués ont eu jusqu'à présent un rapport molaire formaldéhyde/composé amino d'environ 1,8/l. Pour diverses raisons, comme l'empêchement stérique, une quantité non négligeable de l'aldéhyde formique est présente dans le produit fini, même encore après thermodurcissage sous presse, sous forme libre ou seulement faiblement fixée : le matériau contreplaqué aura donc tendance à dégager ce formaldéhyde en excès au cours du temps.

La méthode d'extraction dite "au perforateur" (norme européenne EN 120) permet de mettre en évidence ce formaldéhyde : ainsi un panneau contreplaqué classique fabriqué avec une résine de F/U = 1,8/l donne environ 70 mg de formaldéhyde pour 100 g de panneau sec.

On a cherché à remédier à cela par l'utilisation soit d'additifs faisant office de capteur de formaldéhyde en excès, soit de résines urée-formaldéhyde à plus bas rapport molaire.

Ainsi l'utilisation de la résine précédente, additionnée d'environ 4 % de son poids sec d'urée, permet de descendre le taux selon la norme européenne EN 120 à une valeur de 25 à 40 mg/100 g, correspondant à une émanation dans l'atmosphère de grandes chambres d'essais d'environ 0,1 à 0,15 ppm en volume de formaldéhyde : ce qui est encore insuffisamment bas pour les futures exigences.

Ainsi aussi l'utilisation d'une résine urée-formaldéhyde de F/U = 1,3/l permet de descendre ce taux au "perforateur" selon norme européenne EN 120 à une valeur de 12 à 20 mg/100 g.

Mais, dans les deux cas, et toutes choses égales par ailleurs (nature, température, humidité du bois, etc...), la qualité du prépressage est dégradée à un niveau inacceptable ; l'utilisation simultanée d'essences difficiles ne faisant qu'accentuer l'insatisfaction.

On a déjà proposé d'après le résumé des Chemicals Abstracts, vol. 97, 1982, page 93, résumé n° 146 435, Columbus, Ohio, US, d'améliorer le pressage à froid de panneaux contreplaqués, en traitant des placages fraîchement déroulés, non séchés, avec une solution d'alcool polyvinylique à 10 %, puis après séchage partiel, à revêtir les panneaux à l'aide d'une composition aqueuse contenant un copolymère d'urée formaldéhyde et de chlorure d'ammonium. Ce procédé qui nécessite deux étapes de traitement est industriellement couteux et difficilement réalisable.

En outre, le film d'alcool polyvinylique très hydrolysable ne permet pas d'obtenir un collage définitif satisfaisant. De plus, l'alcool polyvinylique partiellement séché ne peut agir en tant que capteur du formaldéhyde. De sorte, que si ce procédé permet d'améliorer le pressage à froid, il ne fournit pas de panneaux répondant notamment aux normes concernant les quantités de formaldéhyde libre admissibles.

On a aussi proposé d'après le résumé des Chemical Abstracts, vol 75, 1971, page 15, résumé n° 99046 C, Colombus, Ohio, US, d'améliorer les contraintes internes d'un adhésif à base de résine amino épaissie avec de l'amidon par incorporation d'une solution aqueuse d'alcool polyvinylique dans l'adhésif. Mais ce résumé n'aborde pas le problème de l'obtention d'un pressage à froid satisfaisant. Ce problème n'est pas posé du fait que dans une fabrication selon l'état de la technique, on utilise une résine aminoplaste à taux de formaldéhyde élevé, c'est-à-dire avec un rapport molaire formaldéhyde/composé amino de l'ordre de 2, et aussi du fait de la présence d'amidon qui améliore le collage à froid.

L'invention propose un procédé qui obvie aux inconvénients cités et qui en particulier permet d'obtenir aussi bien un excellent prépressage des panneaux qu'un excellent pressage définitif, tout en procurant des panneaux qui présentent un taux de formaldéhyde particulièrement bas.

Le procédé selon l'invention utilise un encollage à l'aide d'un liant contenant une résine aminoplaste, un pressage temporaire à froid et un pressage définitif à chaud, et il se caractérise en ce que l'encollage est réalisé à l'aide d'un liant contenant une résine aminoplaste dont le rapport molaire formaldéhyde/composé amino est compris entre 1/1 et 1,6/1, un composé donneur d'acide et un composé capteur de formaldéhyde réagissant avec celui-ci en présence du donneur d'acide pour former un composé poisseux, c'est-à-dire collant à froid.

Selon une caractéristique avantageuse de l'invention, le capteur de formaldéhyde est choisi parmi les polyalcools, en particulier les alcools polyvinyliques, et il est présent dans le liant à raison de 0,5 à 15 % et de préférence de 2 à 5 % en poids exprimé en matières sèches par rapport au poids en matières sèches de la résine aminoplaste.

Le composé donneur d'acide est de préférence un sel minéral d'acide fort et de base faible, notamment le chlorure d'ammonium.

La résine aminoplaste préférée selon l'invention présente un rapport molaire formaldéhyde/composé amino compris entre 1,25 et 1,4. Elles sont choisies parmi les résines urée-formaldéhyde ou mélamine-formaldéhyde.

Le procédé selon l'invention peut être utilisé pour des essences de bois très variés, incluant des essences réputées difficiles. Il permet d'obtenir des panneaux présentant un taux de formaldéhyde particulièrement bas et inférieur à 10 mg/100 g selon la méthode EN 120.

Lorsque le liant utilisé selon l'invention comprend de l'alcool polyvinylique, celui-ci par réaction sur le formaldéhyde forme un gel procurant au mélange collant des propriétés poisseuses permettant un bon prépressage à froid. En outre cette réaction se faisant aux dépends du formaldéhyde de la résine aminoplaste, le joint de colle finalement obtenu est appauvri en formaldéhyde libre.

L'invention concerne également le liant réactif utilisé pour la mise en oeuvre du procédé. Par liant réactif, on entend toute composition aqueuse d'encollage comprenant la résine aminoplaste à rapport molaire formaldéhyde/composé amino compris entre 1/1 et 1,6/1, le donneur d'acide et le capteur de formaldéhyde réagissant avec celui-ci pour donner un poisseux, et le cas échéant d'autres additifs.

D'autres avantages et caractéristiques de l'invention apparaitront dans la description des exemples suivants :

EXEMPLE 1

On fabrique un panneau contreplaqué multiplis pour usage intérieur en utilisant les conditions suivantes :

- Epaisseur        = 10 mm

- Composition      = 5 plis =

               2 faces 11/10 mm en Okoume,

               2 intérieurs travers 31/10 mm en Pin Maritime,

               1 âme 21/10 mm en Pin Maritime.

- Encollage        = 380 g de mélange collant par $m^2$ double face.

- Attente avant prépressage = 45 mn

- Prépressage      = 10 mn

               8 bars

               20°C

- Pressage         = 6 mn

               14 bars

               112°C

- Mélange collant =

Résine urée-formaldéhyde (F/U = 1,3/1) à 65 %

| | |
|---|---|
| d'extrait sec. | 65,00 |
| Charges minérales | 5,00 |
| Charges organiques | 10,00 |
| Chlorure d'ammonium | 0,80 |
| Alcool polyvinylique | 1,60 |
| Eau | 17,60 |
| | 100,00 |

- Alcool polyvinylique : qualité à haute viscosité et indice d'ester moyen.

Les propriétés du panneau obtenu selon cet exemple et selon les exemples suivants sont rassemblées dans le tableau ci-après.

EXEMPLE 2

On opère comme dans l'exemple 1, sauf qu'on utilise une résine urée-formaldéhyde qui présent un rapport F/U de 1,1/1.

EXEMPLE 3

On opère comme dans l'exemple 1, sauf qu'on utilise une quantité d'alcool polyvinylique correspondant à 1 % en poids exprimé en matières sèches par rapport au poids en matières sèches de la résine aminoplaste.

EXEMPLE COMPARATIF 1

Dans cet exemple, on effectue l'encollage comme indiqué dans le résumé des Chemicals Abstracts n° 146435 v cité précédemment, à savoir en deux étapes une étape consistant à revêtir les plis du panneau avec une solution d'alcool polyvinylique, puis après séchage partiel, une seconde étape consistant à revêtir les plis d'un liant comprenant une résine urée-formaldéhyde présentant un rapport molaire F/U de 1,8/1, des charges minérales, organiques et du chlorure d'ammonium dans les proportions indiquées dans l'exemple 1.

### EXEMPLE COMPARATIF 2

On opère comme dans l'exemple 1 sauf qu'on utilise une résine urée-formaldéhyde présentant un rapport molaire F/U de 1,8/1 et sans alcool polyvinylique.

### EXEMPLE COMPARATIF 3

On opère comme dans l'exemple 1 sauf qu'on utilise une résine urée-formaldéhyde présentant un rapport molaire F/U de 1,8/1 et avec de l'alcool polyvinylique.

### EXEMPLE COMPARATIF 4

On opère comme dans l'exemple 1 sauf qu'on n'utilise pas d'alcool polyvinylique dans le liant.

Ces exemples mettent en évidence les avantages obtenus par le procédé selon l'invention . On constate notamment la très forte amélioration de la qualité du collage temporaire pour une résine à faible rapport molaire F/U selon l'invention comparé à l'exemple comparatif 4. On constate également la bonne qualité de collage définitif, très proche de celui obtenu avec une résine à haut rapport molaire formaldéhyde/composé amino.

Le procédé selon l'invention avec le liant réactif au formaldéhyde qu'il utilise peut être mis en oeuvre dans tous les cas où l'on souhaite fabriquer un matériau à base de bois (ou de lignocellulose) reconstitué et de résine aminoplaste, urée-formaldéhyde ou mélamine-formaldéhyde par exemple, d'une part, bénéficiant d'un bon collage temporaire et d'un bon collage définitif mais, d'autre part, surtout et simultanément, ne possédant qu'une tendance extrêmement faible à dégager du formaldéhyde dans l'atmosphère.

L'application est particulièrement intéressante pour la fabrication, avec de bonnes qualités de prépressage, de contreplaqués multiplis ou d'agglomérés et similaire à base de résine urée-formaldéhyde et à très bas taux de formaldéhyde libre présentant ainsi une bonne aptitude à l'emploi dans le meuble, l'agencement et le bâtiment.

TABLEAU

| | E1 | E2 | E3 | C1 | C2 | C3 | C4 |
|---|---|---|---|---|---|---|---|
| Résine urée-formaldéhyde (F/U = 1,3/1) à 65 % d'extrait sec | 65,00 | / | 65,00 | / | / | / | 65,00 |
| Résine urée-formaldéhyde (F/U = 1,1/1) à 65 % d'extrait sec | / | 65,00 | / | / | / | / | / |
| Résine urée-formaldéhyde (F/U = 1,8/1) à 65 % d'extrait sec | / | / | / | / | 65,00 | 65,00 | / |
| Charges minérales | 5,00 | 5,00 | 5,00 | / | 5,00 | 5,00 | 5,00 |
| Charges organiques | 10,00 | 10,00 | 10,00 | / | 10,00 | 10,00 | 10,00 |
| Chlorure d'ammonium | 0,80 | 0,80 | 0,80 | / | 0,80 | 0,80 | 0,80 |
| Alcool polyvinylique | 1,60 | 1,60 | 0,40 | / | / | 1,60 | / |
| Eau | 17,60 | 17,60 | 18,80 | / | 19,20 | 17,60 | 19,20 |
| | 100,00 | 100,00 | 100,00 | / | 100,00 | 100,00 | 100,00 |
| Collage temporaire après prépressage (note) | 10/10 | 7/10 | 8/10 | 10/10 | 8/10 | 10/10 | 3/10 |
| Collage définitif après pressage à chaud (note) | 10/10 | 6/10 | 9/10 | 5/10 | 10/10 | 10/10 | 8/10 |
| Taux de formol selon EN 120 (mg/100g) | 5-10 | 5-10 | 8-13 | 60 | 70 | 60 | 25 |
| Emanation en grande chambre (ppm volume) | 0,03-0,06 | 0,03-0,06 | 0,05-0,10 | 2,2 | 2,5 | 2 | 0,5 |

## Revendications

1. Procédé pour la fabrication de produits à base de bois, notamment de panneaux contreplaqués, de panneaux agglomérés, à très faible tendance à l'émanation de formaldéhyde, dans lequel on utilise un encollage à l'aide d'un liant contenant une résine aminoplaste, un prépressage à froid et un pressage définitif à chaud, caractérisé en ce que l'encollage est réalisé à l'aide d'un liant comprenant une résine aminoplaste dont le rapport molaire formaldéhyde/composé amino est compris entre 1 et 1,6, un composé donneur d'acide, un composé capteur de formaldéhyde réagissant avec le formaldéhyde en présence du donneur d'acide pour former un composé poisseux.

2. Procédé selon la revendication 1, caractérisé en ce que la résine aminoplaste est choisi parmi les résines urée-formaldéhyde et mélamine formaldéhyde.

3. Procédé selon une des revendications 1 ou 2, caractérisé en ce que le rapport molaire formaldéhyde/composé amino dans le liant est compris entre 1,25 et 1,40.

4. Procédé selon une des revendications 1 à 3, caractérisé en ce que le donneur d'acide est un sel d'acide fort et de base faible.

5. Procédé selon la revendication 4, caractérisé en ce que le sel est du chlorure d'ammonium.

6. Procédé selon une des revendications 1 à 5, caractérisé en ce que le capteur de formaldéhyde est un polyalcool.

7. Procédé selon la revendication 6, caractérisé en ce que le polyalcool est un alcool polyvinylique.

8. Procédé selon la revendication 7, caractérisé en ce que le liant comprend de 0,5 à 15 % et de préférence de 2 à 5 % en poids d'alcool polyvinylique exprimé en matières sèches par rapport au poids en matières sèches de la résine aminoplaste.

9. Liant réactif au formaldéhyde utilisé pour la mise en oeuvre du procédé selon une des revendications 1 à 8, caractérisé en ce qu'il associe une résine aminoplaste et de rapport molaire formaldéhyde/composé amino compris entre 1/1 et 1,6/1, un sel d'acide fort et de base faible et un alcool polyvinylique.

10. Produit à base de bois notamment sous forme de panneaux caractérisé en ce qu'il est obtenu par la mise en oeuvre du procédé selon une des revendications 1 à 9.

Office européen
des brevets

**RAPPORT DE RECHERCHE EUROPEENNE**

Numero de la demande

EP 89 40 1797

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | C.A. FINCH: "Polyvinyl alcohol properties and applications", 1973, pages 194,196,423-426, John Wiley & Sons Ltd, Londres, GB<br>* Chapitre 16.3; pages 423-426; chapitre 9.4; pages 194-196 *<br>--- | 1-10 | C 09 J 161/20<br>C 08 L 97/02<br>B 27 N 3/06<br>B 27 N 1/02 //<br>(C 09 J 161/20<br>C 09 J 129:04 ) |
| Y | PATENT ABSTRACTS OF JAPAN, vol. 8, no. 71 (C-217)[1508], 3 avril 1984; & JP-A-58 222 173 (MITSUI TOATSU KAGAKU K.K.) 23-12-1983<br>* En entier *<br>--- | 1-10 | |
| D,Y | CHEMICAL ABSTRACTS, vol. 97, 1982, page 93, résumé no. 146435v, Columbus, Ohio, US; & JP-A-82 63 202 (AICA KOGYO CO., LTD) 16-04-1982<br>* Résumé *<br>--- | 1-10 | |
| Y | PATENT ABSTRACTS OF JAPAN, vol. 3, no. 79 (C-51), 6 juillet 1979, page 71 C 51; & JP-A-54 55 032 (MITSUI TOATSU KAGAKU K.K.) 01-05-1979<br>* En entier *<br>--- | 1-10 | **DOMAINES TECHNIQUES RECHERCHES (Int. Cl.5)**<br><br>C 08 L |
| Y | SOVIET INVENTIONS ILLUSTRATED, semaine T/09, décembre 1971, page 16, résumé no. T13777-C72, Derwent Publications Ltd, Londres, GB; & SU-A-298 615 (V.M. KOZIN et al.) 12-05-1971<br>* En entier *<br>----- | 1-10 | |

Le présent rapport a été établi pour toutes les revendications

| Lieu de la recherche | Date d'achèvement de la recherche | Examinateur |
|---|---|---|
| LA HAYE | 10-10-1989 | LENSEN H.W.M. |